(19) Europäisches Patentamt
European Patent Office
Office européen des brevets

(11) **EP 1 809 880 B1**

(12) **FASCICULE DE BREVET EUROPEEN**

(45) Date de publication et mention
de la délivrance du brevet:
**08.01.2014 Bulletin 2014/02**

(21) Numéro de dépôt: **05815842.9**

(22) Date de dépôt: **20.10.2005**

(51) Int Cl.:
**F02D 41/14** ^(2006.01)

(86) Numéro de dépôt international:
**PCT/FR2005/050874**

(87) Numéro de publication internationale:
**WO 2006/045972 (04.05.2006 Gazette 2006/18)**

(54) **PROCÉDÉ D'ESTIMATION DU COUPLE DE POMPAGE MOTEUR**

VERFAHREN ZUR SCHÄTZUNG DES PUMPDREHMOMENTS EINES MOTORS

METHOD FOR ESTIMATING THE PUMPING TORQUE OF AN ENGINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.10.2004 FR 0411473**

(43) Date de publication de la demande:
**25.07.2007 Bulletin 2007/30**

(73) Titulaire: **Renault s.a.s.**
**92100 Boulogne Billancourt (FR)**

(72) Inventeurs:
• **MOUNETOU, Christophe**
**F-92240 MALAKOFF (FR)**
• **CRUCHET, Jérôme**
**F-91550 PARAY VIELLE POSTE (FR)**

(56) Documents cités:
**EP-A- 1 347 163     US-A1- 2004 044 461**

**Description**

La présente invention concerne un procédé d'estimation du couple de pompage d'un moteur thermique de véhicule automobile, notamment de véhicule équipé d'un moteur Diesel à injection directe contrôlée électroniquement avec un filtre à particules dans la ligne d'échappement et un volet d'admission dans la ligne d'admission.

Le couple de pompage moteur, c'est-à-dire de la perte ramenée au couple moteur (ou couple résistant moteur) dû au travail de pompage du ou des pistons pendant les phases d'admission et d'échappement, fait partie des grandeurs dont la connaissance est nécessaire aux unités électroniques de contrôle de moteur, qui déterminent les lois de commande du moteur à partir d'un ensemble de paramètres caractérisant le moteur ainsi que de diverses mesures ou estimation de grandeurs.

La demande de brevet EP 1 347 163 décrit un procédé d'estimation du couple de pompage moteur qui tient compte de la présence d'un filtre à particules dans la ligne d'échappement du moteur. Ce procédé suppose notamment la connaissance de la pression en amont de la turbine, pression qui est usuellement mesurée au moyen d'un capteur. Or un tel capteur n'est pas toujours disponible, ce qui rend inutilisable le procédé d'estimation décrit.

Par ailleurs, même en présence d'un tel capteur, il peut se présenter des difficultés ou des incertitudes de mesure de cette pression. Dans ce cas, l'estimation du couple de pompage selon le procédé du document EP 1 347 163 s'avère imprécise ou inexploitable.

Le but de l'invention est de proposer un procédé d'estimation du couple de pompage moteur qui soit utilisable même en l'absence d'une mesure ou d'une estimation de la pression en amont de la turbine et qui tienne compte de la présence de vannages d'admission ou d'échappement tels que filtre à particules ou volet d'admission.

Dans ce but l'invention a pour objet un procédé d'estimation du couple de pompage d'un moteur thermique pour véhicule automobile à injection de carburant contrôlée par un calculateur électronique, remarquable en ce qu'il consiste à déterminer le couple de pompage sous la forme d'un couple relatif de pompage $CMI_{bp\_rel}$ représentatif de la contribution au couple de pompage total des vannages d'admission et d'échappement, le couple relatif de pompage $CMI_{bp\_rel}$ étant déterminé par la relation

$$CMI_{bp\_rel} = \frac{\Delta V * \Delta P_{rel}}{4\pi}$$

dans laquelle $\Delta V$ est cylindrée du moteur et $\Delta P_{rel}$ est la différence de pression, somme de $\Delta P_{éch}$ et de $\Delta P_{adm}$, $\Delta P_{éch}$ étant une estimation du différentiel de pression d'échappement dû à la présence de vannages d'échappement et $\Delta P_{adm}$ étant une estimation du différentiel de pression d'admission dû à la présence de vannages d'admission.

La différence de pression $\Delta P_{rel}$ comprend, d'une part, l'estimation du différentiel de pression côté échappement $\Delta P_{éch}$, et d'autre part, l'estimation du différentiel de pression côté admission $\Delta P_{adm}$. Les différentiels de pression $\Delta P_{éch}$ et $\Delta P_{adm}$ correspondent à la contribution des vannages d'échappement, respectivement d'admission, à la différence de pression $\Delta P_{rel}$, et donc à leur contribution respective au couple de pompage relatif. En conséquence, ces différentiels de pression $\Delta P_{éch}$ et $\Delta P_{adm}$ sont nuls en l'absence de vannage d'échappement, respectivement d'admission.

La différence de pression $\Delta P_{rel}$ ainsi déterminée permet une détermination du couple de pompage relatif du moteur représentatif de la contribution au couple de pompage total des vannages d'admission et d'échappement.

Selon un mode de réalisation particulier, l'estimation de la différence de pression $\Delta P_{rel}$ est effectuée à partir de mesures de pression ou de température effectuées dans la ligne l'échappement et dans la ligne d'admission et de plusieurs paramètres tels que débit massique d'air $Q_a$ d'admission, débit de carburant injecté $Q_c$, régime du moteur N et pression atmosphérique $P_{atm}$.

Lorsque la ligne d'échappement du moteur comprend au moins un vannage d'échappement, ledit différentiel de pression d'échappement $\Delta P_{éch}$ est de préférence déterminé comme le produit d'un coefficient de forme $\eta_{éch}$ et de la différence entre la valeur de mesure de la pression $P_{amf}$ en amont dudit vannage d'échappement et une estimation de la pression d'échappement $P_{amf\_vide}$ en l'absence dudit vannage d'échappement,

$$\Delta P_{éch} = \eta_{éch}\left(P_{amf} - P_{amf\_vide}\right).$$

De même, lorsque la ligne d'admission du moteur comprend des vannages d'admission, ledit différentiel de pression d'admission $\Delta P_{adm}$ est de préférence déterminé comme le produit d'un coefficient de forme $\eta_{adm}$ et de la différence entre la valeur de mesure de la pression $P_{sural}$ en amont desdits vannages d'admission et une estimation de la pression d'admission $P_{sural\_sv}$ en l'absence desdits vannages d'admission,

EP 1 809 880 B1

$$\Delta P_{adm} = \eta_{adm}\left(P_{sural} - P_{sural\_sv}\right).$$

Le procédé selon l'invention peut en outre comporter une ou plusieurs des caractéristiques avantageuses suivantes :

- ladite différence de pression $\Delta P_{rel}$ est filtrée temporellement ; de préférence la constante de temps utilisée pour ce filtrage temporel est fonction du régime du moteur;
- l'estimation de la pression d'échappement en l'absence dudit vannage d'échappement est déterminée en fonction du débit massique d'air injecté dans la ligne d'admission ;
- l'estimation de la pression d'échappement en l'absence dudit vannage d'échappement est corrigée en fonction de la température mesurée en amont dudit vannage d'échappement ;
- l'estimation de la pression d'admission en l'absence desdits vannages d'admission est déterminée en fonction de la quantité totale de carburant injectée et du régime du moteur;
- l'estimation de la pression d'admission en l'absence desdits vannages d'admission est corrigée en fonction de pression atmosphérique.

D'autres caractéristiques et avantages de l'invention apparaîtront à travers la description détaillée qui va suivre et se référant aux figures dans lesquelles :

- la figure 1 est une représentation schématique un exemple d'une ligne d'admission et d'échappement avec filtre à particules, associée à un moteur Diesel ;
- la figure 2 est une représentation schématique des différents couples résistants s'opposant au couple demandé par le conducteur;
- la figure 3 est un diagramme représentant les variations de la pression dans un cylindre en fonction des variations de son volume ;
- la figure 4 est un schéma général des différentes étapes du procédé d'estimation du couple de pompage relatif selon l'invention,
- la figure 5 est un sous-schéma du schéma de la figure 4 correspondant à l'estimation du paramètre $\Delta P_{rel}$.

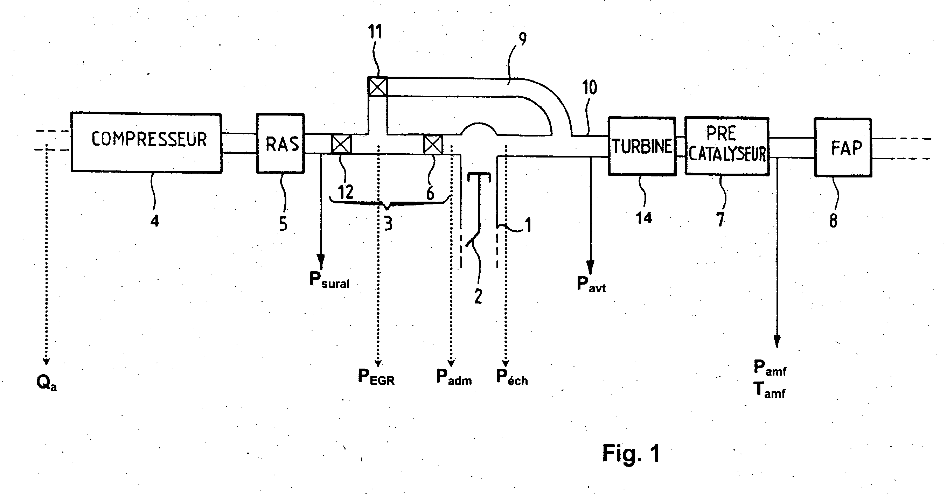

Sur la figure 1, illustrant schématiquement un exemple d'une ligne d'admission et d'échappement d'un moteur de véhicule automobile, doté d'un filtre à particules 8 et d'un circuit 9 de recirculation des gaz d'échappement, est représenté un des cylindres 1 avec piston 2 en communication avec le collecteur 3 d'admission d'air; ou répartiteur d'admission, qui est généralement doté d'un turbocompresseur dans le cas d'un moteur Diesel, composé d'un compresseur 4 en amont du moteur et d'une turbine 14 en aval dans la ligne d'échappement 10. A ce turbocompresseur est éventuellement associé un circuit 5 de refroidissement d'air de suralimentation, destiné à diminuer la température de l'air devant être admis dans les cylindres. En entrée de chaque cylindre, peut être placé un volet d'admission 6 dit de « swirl », destiné à faire varier la quantité d'air entrant dans le cylindre. Dans la ligne d'échappement 10, après la turbine 14 et avant un filtre à particules 8 est monté un précatalyseur 7.

Pour améliorer la dépollution du moteur à injection directe de carburant, contrôlée par un calculateur électronique, on crée un circuit 9 de recirculation d'une partie des gaz d'échappement dans le collecteur d'admission 3, obtenu grâce à une vanne 11 dite d'EGR (de l'anglais « Exhaust Gas Recirculation »). De plus, un volet 12 d'admission est placé en amont du moteur pour diminuer au besoin le débit d'air frais dans le collecteur d'admission 3. Le filtre à particules 8 est destiné à arrêter les suies des gaz brûlés pour respecter les normes anti-pollution, mais peut constituer une contre-pression d'échappement augmentant les pertes moteur et dégradant son rendement.

Les différentes pressions et températures considérées dans le cadre de cette invention sont notées respectivement :

- $P_{sural}$ : pression en amont du collecteur 3,
- $P_{EGR}$ : pression au point de recirculation situé en sortie de la vanne EGR 11,
- $P_{adm}$ : pression en amont du cylindre 1 et en aval du collecteur 3,
- $P_{éch}$ : pression en aval du cylindre 1 et en amont du point d'entrée du circuit - 9 de recirculation,
- $P_{avt}$ : pression en amont de la turbine 14,
- $P_{amf}$ : pression en amont du filtre à particules 8,
- $T_{amf}$ : température en amont du filtre à particules 8.

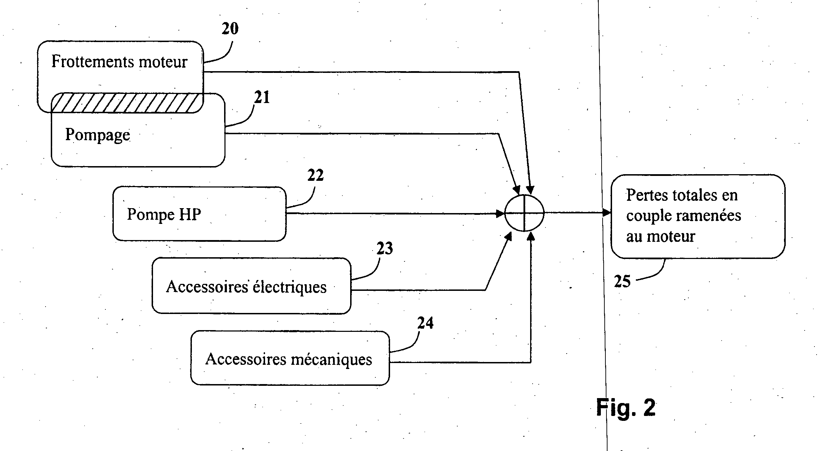

La figure 2 est une représentation schématique des différents facteurs induisant chacun une perte de couple moteur ou un couple résistant moteur. La différence entre une demande prédéterminée de couple du conducteur et le couple moteur effectif en sortie du vilebrequin provient de tous les couples résistants :

- les couples résistants 23 générés par des consommateurs électriques comme les feux de signalisation, les essuie-glaces ...,
- les couples résistants 24 générés par des consommateurs entraînés mécaniquement comme la climatisation ou la pompe d'assistance de la direction,
- le couple résistant 22 généré par la pompe haute pression d'injection du carburant,
- le couple moyen de frottement 20 dans le moteur, et
- le couple de pompage $CMI_{bp}$ 21 du moteur correspondant de manière cumulative au pompage $CMI_{base}$ dû au travail des pistons du moteur (dénommé ici pompage naturel du moteur ou pompage de base $CMI_{base}$), au pompage $CMI_{adm}$ dû aux divers vannages ou autres éléments présents sur la ligne d'admission (dénommé ici pompage d'admission $CMI_{adm}$) et au pompage $CMI_{éch}$ dû aux divers vannages, filtres ou autres éléments présents sur la ligne d'échappement (dénommé ici pompage d'échappement $CMI_{éch}$), dont le pompage dû au filtre à particules.

Le couple résistant moteur total 25 est donc la somme de ces couples résistants 20 à 24. Dans la pratique, tous ces couples résistants sont compensés de manière à ce que pour une même demande du conducteur, c'est-à-dire pour une même position de la pédale d'accélérateur, le ressenti soit identique, c'est-à-dire que le couple moteur effectif CME soit identique, quelles que soient les pertes ramenées au couple moteur. Il en résulte, pour un cycle moteur, un couple moyen indiqué en boucle haute pression $CMI_{hp}$ correspondant à une quantité totale de carburant injectée $Q_c$. Le couple moteur effectif CME est estimé à partir du couple moyen indiqué en boucle haute pression $CMI_{hp}$ et des pertes de couples. Cette estimation du couple moteur effectif CME est transmise vers les calculateurs de la boîte de vitesses automatique, du système d'anti-patinage, ou du contrôle de la distance par exemple, qui peuvent corriger en conséquence la demande du conducteur. De la finesse de l'estimation du couple moteur effectif CME dépend la transparence vis-à-vis du conducteur de l'action de ces calculateurs.

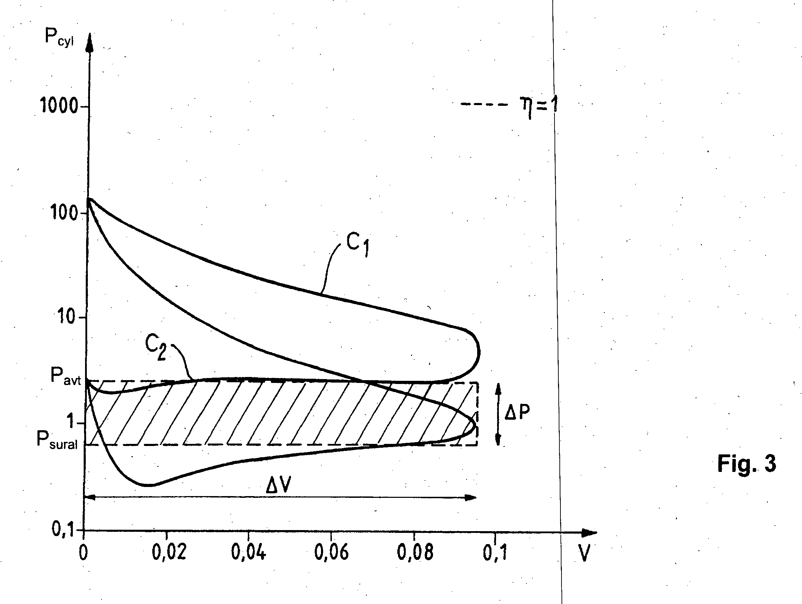

La figure 3 représente les variations de la pression $P_{cyl}$ dans un cylindre 1, exprimée en bars sur une échelle logarithmique, en fonction de sa variation de volume interne, exprimé en $m^3$, pendant le déplacement du piston, lors des quatre temps moteur. La partie $C_1$ de la courbe ou boucle haute pression, située essentiellement au-dessus de la ligne $P_{cyl}=P_{avt}$, correspond aux phases de combustion et de compression. La partie $C_2$ de la courbe ou boucle basse pression, située essentiellement au-dessous de la ligne $P_{cyl}=P_{avt}$ correspond aux phases d'admission et d'échappement. La surface définie par cette partie $C_2$ de la courbe représente le couple moyen indiqué de pompage en boucle basse pression $CMI_{bp}$ pour un cycle moteur.
En première approximation grossière, le couple moyen indiqué de pompage $CMI_{bp}$ est,

$$CMI_{bp} = \eta * \frac{\Delta V * \Delta P}{4\pi} \qquad (1)$$

où

$\Delta P$ est la différence de pression entre la pression $P_{sural}$ en entrée du collecteur et la pression en amont de la turbine $P_{avt}$ dans chaque cylindre,
$\Delta V$ est la cylindrée totale du moteur, déterminée pour les n cylindres du moteur et

$$\eta = 1.$$

Le produit $\Delta V*\Delta P$ est ici divisé par 4n correspondant à deux tours moteur et multiplié optionnellement par un facteur d'échelle, fonction des unités avec lesquelles le calculateur électronique travaille ou avec celles utilisées pour les différentes mesures.
Cette première approximation correspond à la surface rectangulaire hachurée de la figure 3. En réalité le couple moyen indiqué de pompage $CMI_{bp}$ peut être soit plus petit soit plus grand, selon l'allure de la courbe C2 et la surface qu'elle délimite. On introduit une correction de cette première approximation au moyen d'un facteur de forme en remplaçant $\eta$ dans la relation (1) par un coefficient de forme multiplicatif, généralement différent de 1. Selon la demande de brevet EP 1 347 463, ce coefficient est par exemple fonction de $\Delta P$, du régime N du moteur et de la pression $P_{sural}$ en entrée du collecteur.

La relation (1) donnée plus haut correspond au couple de pompage total ou absolu $CMI_{bp}$ : il comprend le couple de pompage naturel du moteur $CMI_{base}$, le couple de pompage d'admission $CMI_{adm}$ et le couple de pompage d'échappement $CMI_{éch}$ :

$$CMI_{bp} = CMI_{base} + CMI_{adm} + CMI_{éch} = \eta * \frac{\Delta V * \Delta P}{4\pi} = \eta * \frac{\Delta V * (P_{sural} - P_{avt})}{4\pi}.$$

Idéalement, ce sont les pressions $P_{adm}$ et $P_{éch}$ (voir figure 1) mesurées au plus proche du cylindre 1, c'est-à-dire au niveau des soupapes d'admission et d'échappement du cylindre 1, qui seraient nécessaires pour le calcul du couple de pompage global du moteur. On dispose en général plutôt de la mesure des pressions $P_{sural}$ et $P_{avt}$.

Mais en l'absence de capteur pour la mesure de la pression $P_{avt}$ en amont de la turbine ou lorsque l'obtention d'une mesure fiable et précise de la pression en amont de la turbine est difficile ou impossible, il n'est pas possible de déterminer le couple de pompage naturel du moteur $CMI_{base}$. Par ailleurs la mesure de la pression d'échappement $P_{éch}$ peut, elle aussi, ne pas être connue du module de contrôle moteur. L'estimation du couple de pompage total est alors quasiment impossible. Dans de tels cas, au lieu du couple de pompage total, on détermine selon l'invention un couple de pompage relatif $CMI_{bp\_rel}$ défini comme suit :

$$CMI_{bp\_rel} = CMI_{bp} - CMI_{base} = CMI_{adm} + CMI_{éch}.$$

Par ailleurs, comme le suggère la surface hachurée de la figure 2 représentant l'intersection des éléments 20 et 21, il est difficile d'estimer le couple résistant dû aux frottements moteur et le couple de pompage sans comptabiliser deux fois le couple de pompage de base, déjà pris en compte dans l'estimation des frottements moteur. L'estimation d'un couple de pompage relatif permet donc de s'affranchir de cette difficulté et s'avère suffisant pour corriger la demande de couple conducteur et obtenir un couple moteur effectif indépendant des pertes dues aux vannages d'admission et d'échappement.

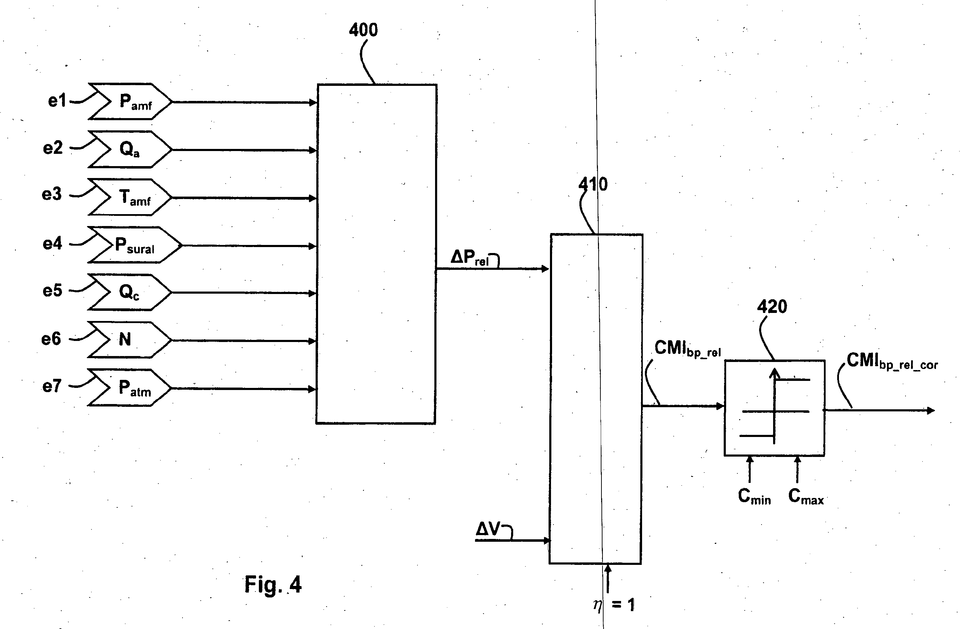

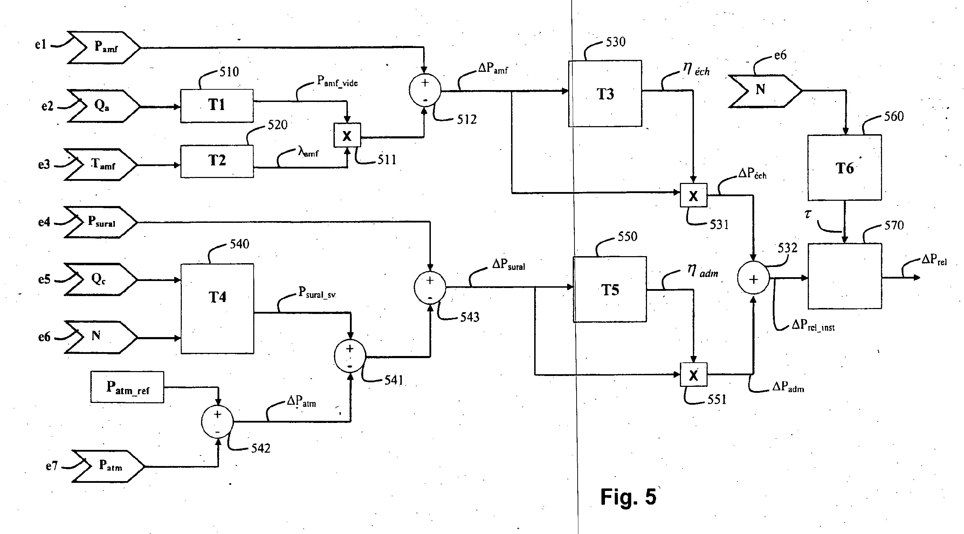

Le procédé d'estimation du couple de pompage selon l'invention est maintenant décrit plus en détail par référence aux figures 4 et 5.

La figure 4 est un schéma général des différentes étapes du procédé d'estimation du couple de pompage selon l'invention. On détermine dans une première étape 400 une différence de pression $\Delta P_{rel}$ à partir de plusieurs variables e1 à e7 qui sont respectivement :

- e1 : la pression $P_{amf}$ mesurée en amont du filtre à particules 8,
- e2 : le débit massique d'air $Q_a$ mesuré en amont du compresseur 4,
- e3 : la température $T_{amf}$ mesurée en amont du filtre à particules 8,
- e4 : la pression $P_{sural}$ mesurée en amont du collecteur d'admission 3,
- e5 : le débit de carburant injecté $Q_c$, sous la forme d'une valeur de consigne délivrée pour un module de commande d'injection,
- e6 : le régime du moteur N tel que mesuré,
- e7 : la pression atmosphérique $P_{atm}$ telle que mesurée.

Le mode de calcul de la différence de pression $\Delta P_{rel}$ à partir des variables e1 à e7 est illustré par la figure 5 est sera décrit plus loin. A partir de cette différence de pression $\Delta P_{rel}$ et de la cylindrée $\Delta V$, est calculé à l'étape 410 le couple de pompage sous la forme d'un couple de pompage relatif $CMI_{bp\_rel}$ selon la relation (1) déjà décrite pour l'estimation du couple de pompage global et dans laquelle le facteur de forme a été mis à 1 :

$$CMI_{bp\_rel} = \frac{\Delta V * \Delta P_{rel}}{4\pi}.$$

Le facteur de forme $\eta$ est ici mis à 1 dans la mesure où le facteur de forme est pris en compte dans l'estimation de la différence de pression $\Delta P_{rel}$ déterminée à l'étape 400, comme cela sera décrit plus loin.

Enfin, on détermine à l'étape 420 la valeur corrigée du couple de pompage relatif $CMI_{bp\_rel\_cor}$ en limitant la valeur du couple de pompage relatif $CMI_{bp\_rel}$ entre une valeur minimale de couple de pompage relatif $C_{min}$ et une valeur

maximale de couple de pompage relatif $C_{max}$.

Le procédé d'estimation de la différence de pression $\Delta P_{rel}$ est maintenant décrit par référence à la figure 5.

A l'étape 510 est déterminée, en fonction du débit massique d'air $Q_a$ mesuré en amont du compresseur 4 et au moyen d'une table à une dimension T1, une estimation de la pression $P_{amf\_vide}$ présente en amont du filtre à particule lorsque celui-ci est vide. Il s'agit en fait d'une estimation de la pression $P_{éch}$ qui régnerait au point de mesure de la pression $P_{amf}$ avec un filtre à particules vide. Optionnellement, la valeur $P_{amf\_vide}$ ainsi déterminée, est corrigée en fonction de la température en multipliant à l'étape 511 la valeur $P_{amf\_vide}$ obtenue à l'étape 510 par un coefficient de correction $\lambda_{amf}$. Ce coefficient de correction est déterminé à l'étape 520, en fonction de la température $T_{amf}$ mesurée en amont du filtre à particules et au moyen d'une table à une dimension T2. On effectue ensuite à l'étape 512 la différence entre la pression $P_{amf}$ mesurée en amont du filtre à particules et la pression déterminée à l'étape 510 ou 511 pour obtenir une différence de pression $\Delta P_{amf}$ représentative de la contribution du filtre à particules sur la différence de pression $\Delta P_{rel}$. Cette différence de pression $\Delta P_{amf}$ est de préférence corrigée à l'étape 531 par un coefficient de forme multiplicatif $\eta_{éch}$, lui-même déterminé à l'étape 530 en fonction de la différence de pression $\Delta P_{amf}$ et au moyen d'une table à une dimension T3. On obtient suite à l'étape 531 une différence de pression d'échappement $\Delta P_{éch}$ ou différentiel de pression d'échappement dû à la présence des vannages d'échappement, en l'occurrence dans cet exemple de réalisation, dû au filtre à particules.

Parallèlement aux étapes 510 à 531 de détermination d'un différentiel de pression d'échappement $\Delta P_{éch}$ et indépendamment de ces étapes, on détermine aux étapes 540 à 551 un différentiel de pression d'admission $\Delta P_{adm}$.

On détermine ainsi à l'étape 540 une estimation de la pression de suralimentation en l'absence de vannage d'admission $P_{sural\_sv}$ à partir du débit de carburant injecté $Q_c$ dans chaque cylindre, du régime du moteur N et au moyen d'une table à deux dimensions T4. Il s'agit en fait une estimation de la pression $P_{adm}$ qui régnerait à l'entrée du cylindre 1 en l'absence (ou, ce qui revient au même, en cas d'ouverture complète) des vannages d'admission que sont le volet d'admission 12, la vanne EGR 11 et le volet de swirl 6. La pression de suralimentation en l'absence de vannage d'admission $P_{sural\_sv}$ est de préférence corrigée à l'étape 541 par la différence effectuée à l'étape 542 entre la pression atmosphérique courante et une pression atmosphérique de référence $P_{atm\_ref}$ pour laquelle la table T4 a été déterminée. On effectue ensuite à l'étape 543 la différence entre la pression $P_{sural}$ et la pression déterminée à l'étape 540 ou 541 pour obtenir une différence de pression $\Delta P_{sural}$ représentative de la contribution des vannages d'admission sur la différence de pression $\Delta P_{rel}$. Cette différence de pression $\Delta P_{sural}$ est de préférence corrigée à l'étape 551 par un coefficient de forme multiplicatif $\eta_{adm}$, lui-même déterminé à l'étape 550 à partir de la différence de pression $\Delta P_{sural}$ et au moyen d'une table à une dimension T5. On obtient suite à l'étape 551 une différence de pression d'admission $\Delta P_{adm}$ ou différentiel de pression d'admission dû à la présence des vannages d'admission.

A partir du différentiel de pression d'échappement $\Delta P_{éch}$ et du différentiel de pression d'admission $\Delta P_{adm}$, on détermine à l'étape 532 une différence de pression instantanée $\Delta P_{rel\_inst}$ en effectuant la somme du différentiel de pression d'échappement $\Delta P_{éch}$ et du différentiel de pression d'admission $\Delta P_{adm}$. Cette différence de pression instantanée $\Delta P_{rel\text{-}inst}$ est de préférence filtrée à l'étape 570 au moyen d'un filtre temporel pour générer la différence de pression $\Delta P_{rel}$ qui sera utilisée à l'étape 410 pour la détermination du couple de pompage moteur relatif. Le filtre temporel utilisé à l'étape 570 est par exemple un filtre du premier ordre, dont la constante de temps $\tau$ est déterminée à l'étape 560 en fonction du régime du moteur N. Cette détermination s'effectue de préférence au moyen d'une table à une dimension T6. De préférence la constante de temps sera d'autant plus élevée que le régime du moteur sera bas.

Les différentes tables T1 à T6 utilisées dans la réalisation du procédé selon l'invention sont issues de mesures effectuées sur banc d'essai et utilisant des capteurs supplémentaires par rapport à ceux présents dans les véhicules fabriqués en série. En utilisant des capteurs supplémentaires, on peut constituer chaque table en y consignant, pour un nombre donné de valeurs de la ou des variables d'entrées de cette table, la valeur de mesure obtenue chaque fois pour la variable de sortie de cette table. La constitution préalable de ces tables, qui donc modélisent les relations entre leurs paramètres d'entrée et de sortie respectifs, et leur utilisation ultérieure dans les véhicules fabriqués en série en remplacement des capteurs supplémentaires, permet donc de faire l'économie de ces capteurs supplémentaires et d'éviter des modélisations ou des calculs fastidieux sur ces véhicules.

La constitution des tables T3 et T5 générant un facteur de forme nécessite en outre une détermination par calcul du facteur de forme à partir d'une courbe obtenue par mesure. Cette courbe de mesure est par exemple sous la forme illustrée à la figure 3 montrant la courbe de variation de la pression $P_{cyl}$ dans le cylindre en fonction du volume V. Le facteur de forme est déduit, dans le cas par exemple de la détermination du facteur de forme $\eta$ correspondant à la relation (1), en calculant la valeur de $\eta$ à partir de la relation (1) dans laquelle ont été injectées la valeur de $CMI_{bp}$ déterminée par calcul comme étant la surface de la courbe C2, ainsi que la valeur de mesure obtenue pour $\Delta P$ et la valeur connue de $\Delta V$. Cet exemple de détermination se transpose aisément aux tables T3 et T5 en déterminant par mesure la courbe d'évolution de la pression dans les différents points concernés de la ligne d'échappement et d'admission.

**Revendications**

1. Procédé d'estimation du couple de pompage d'un moteur thermique pour véhicule automobile à injection de carburant contrôlée par un calculateur électronique,

   **caractérisé en ce qu'**il consiste à déterminer le couple de pompage sous la forme d'un couple relatif de pompage $CMI_{bp\_rel}$ représentatif de la contribution au couple de pompage total des vannages d'admission et d'échappement, le couple relatif de pompage $CMI_{bp\_rel}$ étant déterminé par la relation

$$CMI_{bp\_rel} = \frac{\Delta V * \Delta P_{rel}}{4\pi}$$

   dans laquelle $\Delta V$ est cylindrée du moteur et $\Delta P_{rel}$ est la différence de pression, somme de $\Delta P_{éch}$ et de $\Delta P_{adm}$, $\Delta P_{éch}$ étant une estimation du différentiel de pression d'échappement dû à la présence de vannages d'échappement et $\Delta P_{adm}$ étant une estimation du différentiel de pression d'admission dû à la présence de vannages d'admission. ,

2. Procédé selon la revendication 1 **caractérisé en ce que** ladite différence de pression $\Delta P_{rel}$ est filtrée temporellement.

3. Procédé selon la revendication 2 **caractérisé en ce que** la constante de temps dudit filtrage temporel est fonction du régime du moteur.

4. Procédé selon l'une quelconque des revendications 1 à 3 **caractérisé en ce qu'**il est adapté pour un moteur dont la ligne d'échappement comprend au moins un vannage d'échappement, ledit différentiel de pression d'échappement $\Delta P_{éch}$ étant déterminé comme le produit d'un coefficient de forme $\eta_{éch}$ et de la différence entre la valeur de mesure de la pression $P_{amf}$ en amont dudit vannage d'échappement et une estimation de la pression d'échappement $P_{amf\_vide}$ en l'absence dudit vannage d'échappement,

$$\Delta P_{éch} = \eta_{éch}\left(P_{amf} - P_{amf\_vide}\right).$$

5. Procédé selon la revendication 4 **caractérisé en ce que** ledit vannage d'échappement est un filtre à particules.

6. Procédé selon l'une des revendications 4 ou 5 **caractérisé en ce que** l'estimation de la pression d'échappement ($P_{amf\_vide}$) en l'absence dudit vannage d'échappement est déterminée en fonction du débit massique d'air ($Q_a$) injecté dans la ligne d'admission.

7. Procédé selon l'une quelconque des revendications 4 à 6 **caractérisé en ce que** l'estimation de la pression d'échappement ($P_{amf\_vide}$) en l'absence dudit vannage d'échappement est corrigée en fonction de la température ($T_{amf}$) mesurée en amont dudit vannage d'échappement.

8. Procédé selon l'une quelconque des revendications 1 à 3 **caractérisé en ce qu'**il est adapté pour un moteur dont la ligne d'admission comprend des vannages d'admission, ledit différentiel de pression d'admission $\Delta P_{adm}$ étant déterminé comme le produit d'un coefficient de forme $\eta_{adm}$ et de la différence entre la valeur de mesure de la pression $P_{sural}$ en amont desdits vannages d'admission et une estimation de la pression d'admission $P_{sural\_sv}$ en l'absence desdits vannages d'admission,

$$\Delta P_{adm} = \eta_{adm}\left(P_{sural} - P_{sural\_sv}\right).$$

9. Procédé selon la revendication 8 **caractérisé en ce que** lesdits vannages d'admission comprennent un volet d'admission, un volet de swirl ou une vanne EGR.

10. Procédé selon l'une des revendications 8 ou 9 **caractérisé en ce que** l'estimation de la pression d'admission ($P_{sural\_sv}$) en l'absence desdits vannages d'admission est déterminée en fonction de la quantité totale de carburant injectée ($Q_c$) et du régime du moteur ($N$).

**11.** Procédé selon l'une quelconque des revendications 8 à 10 **caractérisé en ce que** l'estimation de la pression d'admission ($P_{sural\_sv}$) en l'absence desdits vannages d'admission est corrigée en fonction de pression atmosphérique ($P_{atm}$).

**Patentansprüche**

**1.** Verfahren zur Schätzung des Pumpmoments eines Verbrennungsmotors für ein Kraftfahrzeug mit von einem elektronischen Rechner gesteuerter Kraftstoffeinspritzung,
**dadurch gekennzeichnet, dass** es darin besteht, das Pumpmoment in Form eines relativen Pumpmoments $CMI_{bp\_rel}$ zu bestimmen, das für den Beitrag zum Gesamtpumpmoment der Ansaug- und Abgasventilanordnungen repräsentativ ist,
wobei das relative Pumpmoment $CMI_{bp\_rel}$ durch die folgende Beziehung bestimmt wird

$$CMI_{bp\_rel} = \frac{\Delta V * \Delta P_{rel}}{4\pi}$$

in der $\Delta V$ der Hubraum des Motors und $\Delta P_{rel}$ die Druckdifferenz, die Summe von $\Delta P_{éch}$ und $\Delta P_{adm}$, ist, wobei $\Delta P_{éch}$ eine Schätzung des Abgasdruckdifferentials aufgrund des Vorhandenseins von Abgasventilanordnungen und $\Delta P_{adm}$ eine Schätzung des Ansaugdruckdifferentials aufgrund des Vorhandenseins von Ansaugventilanordnungen ist.

**2.** Verfahren nach Anspruch 1, **dadurch gekennzeichnet, dass** die Druckdifferenz $\Delta P_{rel}$ zeitlich gefiltert wird.

**3.** Verfahren nach Anspruch 2, **dadurch gekennzeichnet, dass** die Zeitkonstante der zeitlichen Filterung von der Drehzahl des Motors abhängt.

**4.** Verfahren nach einem der Ansprüche 1 bis 3, **dadurch gekennzeichnet, dass** es für einen Motor geeignet ist, dessen Abgasanlage mindestens eine Abgasventilanordnung enthält, wobei das Abgasdruckdifferential $\Delta P_{éch}$ als das Produkt eines Koeffizienten der Form $\eta_{éch}$ und der Differenz zwischen dem Messwert des Drucks $P_{amf}$ stromaufwärts vor der Abgasventilanordnung und einer Schätzung des Abgasdrucks $P_{amf\_vide}$ in Abwesenheit der Abgasventilanordnung bestimmt wird

$$\Delta P_{éch} = \eta_{éch}(P_{amf} - P_{amf\_vide}).$$

**5.** Verfahren nach Anspruch 4, **dadurch gekennzeichnet, dass** die Abgasventilanordnung ein Partikelfilter ist.

**6.** Verfahren nach einem der Ansprüche 4 oder 5, **dadurch gekennzeichnet, dass** die Schätzung des Abgasdrucks ($P_{amf\_vide}$) in Abwesenheit der Abgasventilanordnung abhängig vom in die Ansaugleitung eingespritzten Luftmassenstrom ($Q_a$) bestimmt wird.

**7.** Verfahren nach einem der Ansprüche 4 bis 6, **dadurch gekennzeichnet, dass** die Schätzung des Abgasdrucks ($P_{amf\_vide}$) in Abwesenheit der Abgasventilanordnung abhängig von der stromaufwärts vor der Abgasventilanordnung gemessenen Temperatur ($T_{amf}$) korrigiert wird.

**8.** Verfahren nach einem der Ansprüche 1 bis 3, **dadurch gekennzeichnet, dass** es für einen Motor geeignet ist, dessen Ansaugleitung Ansaugventilanordnungen enthält, wobei das Ansaugdruckdifferential $\Delta P_{adm}$ als das Produkt eines Koeffizienten der Form $\eta_{adm}$ und der Differenz zwischen dem Messwert des Drucks $P_{sural}$ stromaufwärts vor den Ansaugventilanordnungen und einer Schätzung des Ansaugdrucks $P_{sural\_sv}$ in Abwesenheit der Ansaugventilanordnungen bestimmt wird

$$\Delta P_{adm} = \eta_{adm}(P_{sural} - P_{sural\_sv}).$$

9.  Verfahren nach Anspruch 8, **dadurch gekennzeichnet, dass** die Ansaugventilanordnungen eine Ansaugklappe, eine Swirl-Klappe oder ein AGR-Ventil enthalten.

10. Verfahren nach einem der Ansprüche 8 oder 9, **dadurch gekennzeichnet, dass** die Schätzung des Ansaugdrucks ($P_{sural\_sv}$) in Abwesenheit der Ansaugventilanordnungen abhängig von der eingespritzten Gesamtkraftstoffmenge ($Q_c$) und von der Drehzahl des Motors (N) bestimmt wird.

11. Verfahren nach einem der Ansprüche 8 bis 10, **dadurch gekennzeichnet, dass** die Schätzung des Ansaugdrucks ($P_{sural\_sv}$) in Abwesenheit der Ansaugventilanordnungen abhängig vom Atmosphärendruck ($P_{atm}$) korrigiert wird.

**Claims**

1.  Method of estimating the pumping torque of an internal combustion engine for a motor vehicle equipped with fuel injection controlled by an electronic computer, **characterized in that** it consists in determining the pumping torque in the form of a relative pumping torque $CMI_{bp\_rel}$ representative of the contribution to the total pumping torque of the intake and exhaust valving means, the relative pumping torque $CMI_{bp\_rel}$ being determined by the equation:

$$CMI_{bp\_rel} \; = \; \frac{\Delta V \times \Delta P_{rel}}{4\pi}$$

in which $\Delta V$ is the swept volume of the engine and $\Delta P_{rel}$ is the pressure difference, the sum of $\Delta P_{ech}$ and $\Delta P_{adm}$, $\Delta P_{ech}$ being an estimate of the exhaust pressure differential due to the presence of exhaust valving means and $\Delta P_{adm}$ being an estimate of the intake pressure differential due to the presence of intake valving means.

2.  Method according to Claim 1, **characterized in that** said pressure difference $\Delta P_{rel}$ is temporally filtered.

3.  Method according to Claim 2, **characterized in that** the time constant of said temporal filtering is a function of the engine speed.

4.  Method according to any one of Claims 1 to 3, **characterized in that** it is adapted for an engine whose exhaust line includes at least one exhaust valving means, said exhaust pressure differential $\Delta P_{ech}$ being determined as the product of a coefficient $\eta_{ech}$ and the difference between the measured value of the pressure $P_{amf}$ upstream of said exhaust valving means and an estimate of the exhaust pressure $P_{amf\_vide}$ in the absence of said exhaust valving means,

$$\Delta P_{ech} \; = \; \eta_{ech} \; (P_{amf} \; - \; P_{amf\_vide}) \; .$$

5.  Method according to Claim 4, **characterized in that** said exhaust valving means is a particulate filter.

6.  Method according to either of Claims 4 and 5, **characterized in that** the estimate of the exhaust pressure ($P_{amf\_vide}$) in the absence of said exhaust valving means is determined as a function of the mass flow rate ($Q_a$) of air injected into the intake line.

7.  Method according to any one of Claims 4 to 6, **characterized in that** the estimate of the exhaust pressure ($P_{amf\_vide}$) in the absence of said exhaust valving means is corrected according to the temperature ($T_{amf}$) measured upstream of said exhaust valving means.

8.  Method according to any one of Claims 1 to 3, **characterized in that** it is adapted for an engine the intake line of which includes intake valving means, said intake pressure differential $\Delta P_{adm}$ being determined as the product of a coefficient $\eta_{adm}$ and the difference between the measured value of the pressure $P_{sural}$ upstream of said intake valving means and an estimate of the intake pressure $P_{sural\_sv}$ in the absence of said intake valving means,

$$\Delta P_{adm} = \eta_{adm}(P_{sural} - P_{sural\_sv}).$$

9. Method according to Claim 8, **characterized in that** said intake valving means comprise an intake flap, a swirl flap or an EGR valve.

10. Method according to either of Claims 8 and 9, **characterized in that** the estimate of the intake pressure ($P_{sural\_sv}$) in the absence of said intake valving means is determined as a function of the total amount of injected fuel ($Q_c$) and of the engine speed (N).

11. Method according to any one of Claims 8 to 10, **characterized in that** the estimate of the intake pressure ($P_{sural\_sv}$) in the absence of said intake valving means is corrected according to the atmospheric pressure ($P_{atm}$).

$$\Delta P_{adm} = \eta_{adm}(P_{sural} - P_{sural\_sv}).$$

Fig. 1

| COMPRESSEUR | RAS | | | TURBINE | PRE CATALYSEUR | FAP |

$Q_a$

$P_{sural}$

$P_{EGR}$   $P_{adm}$   $P_{éch}$

$P_{avt}$

$P_{amf}$
$T_{amf}$

4   5   12   3   6   2   1   14   7   8

11   9   10

EP 1 809 880 B1

Pertes totales en
couple ramenées
au moteur

25

Frottements moteur

20

Pompage

21

Pompe HP

22

Accessoires électriques

23

Accessoires mécaniques

24

**Fig. 2**

Fig. 3

Fig. 4

EP 1 809 880 B1

Fig. 5

**RÉFÉRENCES CITÉES DANS LA DESCRIPTION**

**Documents brevets cités dans la description**

- EP 1347163 A

- EP 1347463 A